# EUROPÄISCHE PATENTANMELDUNG

(11) **EP 1 972 751 A2**
(43) Veröffentlichungstag der Anmeldung: **24.09.2008**
(21) Anmeldenummer: 08102370.7
(22) Anmeldetag: 07.03.2008
(51) Int. Cl.: E06B 9/82

(54) **Überwachungseinrichtung für ein motorisch angetriebenes Tor**

(30) Priorität: 23.03.2007 DE 102007014627; 23.03.2007 DE 102007014626; 05.07.2007 EP 07111823
(71) Anmelder: Feig Electronic GmbH, 35781 Weilburg-Waldhausen (DE)
(72) Erfinder: Schäfer, Dirk, 35789, Weilmünster (DE)
(74) Vertreter: Knefel, Cordula

(57) **Zusammenfassung**

Überwachungseinrichtung für ein motorisch angetriebenes Tor mit einer Torsteuerung zur Erkennung eines Crashs eines sich bewegenden Objektes mit dem Tor und zur Übermittlung der Information, ob ein Crash stattgefunden hat, an die Torsteuerung, bei der die Überwachungseinrichtung mindestens einen eine Bewegung, eine Erschütterung und/oder eine Vibration des Tores in einer Z-Achse überwachenden Sensor aufweist, der im und/oder am Torblatt des Tores angeordnet ist, und bei der eine Auswerteeinheit vorgesehen ist, die als eine die Signale des Sensors auswertende und als Information an die Torsteuerung übertragende Auswerteeinheit ausgebildet ist.

## Beschreibung

Die Erfindung betrifft eine Überwachungseinrichtung für ein motorisch angetriebenes Tor.

Zum Stand der Technik (DE 43 13 063 C2) gehört ein Rolltor mit flexiblem Behang.

Der Behang dieses zum Stand der Technik gehörenden Rolltores besteht aus einem Polycarbonatmaterial, das im Vergleich etwa zu Stahl eine erheblich verminderte Biegesteifigkeit und eine wesentlich höhere elastische Verformbarkeit aufweist, so dass der Behang bei Zusammenstößen mit Fahrzeugen oder dergleichen, selbst bei höheren Aufprallgeschwindigkeiten, ohne Knickungen elastisch auslenkt, und ohne dass der Behang aus der Führungsschiene springt.

In der Schnelllauftorbranche bezeichnet man einen solchen Zusammenstoß als Crash, die spezielle Ausführungsform der Tore, die einen solchen Crash abfangen können, dementsprechend als Crashtor.

Wird ein Crash detektiert, wird das Tor gemäß dem Stand der Technik (DE 296 06 569 U1 und DE 296 23 551 U1) in eine vorbestimmte Position gefahren, beispielsweise oberhalb einer trichterförmigen Einfädelvorrichtung, so dass das Tor wieder selbsttätig in die Laufschienen zurückkehrt.

Um einen derartigen Crash detektieren zu können, sind gemäß dem Stand der Technik (DE 43 13 062 C2 und DE 296 23 551 U1) Sensoren in oder an den Führungselementen oder der untersten Abschlussleiste des Tores angeordnet. Diese Sensoren detektieren, wenn das Tor aus der Führungsschiene gesprungen ist und übermitteln bei einem Crash ein Signal an die Torsteuerung, beispielsweise über Spiralkabel.

Diese zum Stand der Technik gehörenden Vorrichtungen weisen den Nachteil auf, dass das Anordnen der Sensoren im Bereich der Führungselemente sehr aufwändig ist. Es müssen eine Reihe von Sensoren vorgesehen sein, die darüber hinaus bei der Montage entsprechend eingestellt und justiert werden müssen, damit ein Crash zuverlässig detektiert wird. Ferner unterliegen die Sensoren, die in der Regel als Schalter oder Taster mit einer vorgespannten Feder ausgeführt sind, einem gewissen Verschleiß, da zwischen ihren Betätigungselementen und den Führungselementen des Tores bei jeder Torbewegung ein mechanischer Kontakt bestehen muss.

Die zum Stand der Technik (DE 296 23 551 U1) gehörende Vorrichtung weist zudem den Nachteil auf, dass keine Unterscheidung zwischen einem Crash oder einem Zusammenstoß aufgrund eines Objekts, welches sich unter dem Tor befindet, möglich ist, so dass jede Impulsgabe als Crash gewertet wird. Zudem hat diese Vorrichtung den Nachteil, dass sie jeweils an die spezifische Torbreite angepasst werden muss.

Bei einer anderen zum Stand der Technik (DE 296 06 569 U1) zählenden Vorrichtung zur Erkennung eines Crashs wird eine längs der unteren Abschlussleiste des Tores verlaufende Kontaktschiene hinsichtlich ihrer Verformung ausgewertet. Diese Vorrichtung hat den Nachteil, dass die Vorrichtung jeweils an die spezifische Torbreite angepasst werden muss und zwei zusätzliche Kontaktschienen notwenig sind, um einen Crash erkennen zu können.

Darüber hinaus weist diese zum Stand der Technik gehörende Vorrichtung den Nachteil auf, dass das Signal über ein Spiralkabel an die Torsteuerung übermittelt wird. Das Spiralkabel ist nachteilig, da dieses einem großen Verschleiß unterliegt, weil es bei jeder Torbewegung dem Torblatt folgen muss.

Weiterhin gehört zum Stand der Technik (US 5,412,297 A) eine Schließkanteneinheit, die das hindernisfreie Schließen eines Tores überwacht. Gemäß diesem Stand der Technik ist ein Vibrationssensor vorgesehen, der die Bewegung des Tores erfasst und eine Kontrollelektronik inklusive eines Mikroprozessors und eines Signaltransmitters so lange aktiviert, wie er die Bewegung des Tores detektiert. Ein Transmitter übermittelt nach dem Aufwecken ein kontinuierliches erstes "Heartbeat"-Signal. Sobald die Schließkanteneinheit ein Hindernis detektiert hat, sendet sie ein anderes Heartbeat-Signal, welches sich von dem ersten Heartbeat-Signal unterscheidet. Empfängt die Torsteuerung dieses zweite Heartbeat-Signal oder keines der beiden Heartbeat-Signale, wird die Torbewegung gestoppt oder es erfolgt eine Reversion der Torbewegung, bis das Tor vollständig geöffnet ist. Das "Heartbeat"-Signal wird beispielsweise bei einem Defekt der Schließkanteneinheit unterbrochen.

Bei diesem zum Stand der Technik gehörenden Verfahren wird ein Vibrationssensor dazu verwendet, jede Torbewegung zu detektieren, damit die Schließkanteneinheit für die Dauer der Torbewegung ein Signal aussendet. Eine Unterscheidung, um welche Art einer Torbewegung es sich dabei handelt oder in welche Richtung sich das Tor bewegt, ist dabei nicht vorgesehen. Vielmehr würde die Schließkanteneinheit der Torsteuerung einen Crash als normale Torbewegung signalisieren.

Das der Erfindung zugrunde liegende technische Problem besteht darin, eine Überwachungseinrichtung für ein automatisch angetriebenes Tor anzugeben, welche in einfacher Weise einen Crash eines Objektes mit dem Tor detektieren und zuverlässig an die Torsteuerung weiterleiten kann.

Die erfindungsgemäße Überwachungseinrichtung für ein motorisch angetriebenes Tor mit einer Torsteuerung zur Erkennung eines Crashs eines sich bewegenden Objektes mit dem Tor und zur Übermittlung der Information, ob ein Crash stattgefunden hat, an die Torsteuerung, zeichnet sich dadurch aus, dass die Überwachungseinrichtung mindestens einen eine Bewegung, eine Erschütterung und/oder eine Vibration des Tores in einer Z-Achse überwachenden Sensor aufweist, der in einem und/oder an einem Torblatt des Tores angeordnet ist, und dass eine Auswerteeinheit vorgesehen ist, die als eine die Signale des Sensors auswertende und als eine wenigstens eine Information an die Torsteuerung übertragende Auswerteeinheit ausgebildet ist.

Das sich bewegende Objekt kann ein Fahrzeug wie auch ein Gegenstand sein.

Gemäß der erfindungsgemäßen Überwachungseinrichtung ist es vorgesehen, einen Sensor im Torblatt eines vorzugsweise schnell laufenden Tores, insbesondere eines Industrietores zu integrieren. Der Sensor, der als Erschütterungssensor, Vibrationssensor, Beschleunigungssensor oder dergleichen ausgebildet ist und nachfolgend nur noch als Beschleunigungssensor bezeichnet wird, ist erfindungsgemäß in der Lage, typische Erschütterungen beziehungsweise Bewegungen zu erkennen, wie diese bei einem Zusammenstoß (Crash) entstehen, beispielsweise wenn ein Fahrzeug mit dem Torblatt zusammenstößt.

Als Beschleunigungssensor kann beispielsweise der dreiachsige Beschleunigungssensor SMB380 (Handelsname) von Bosch (Firmenname) oder ein anderer Beschleunigungssensor eingesetzt werden.

Im normalen Betrieb eines Tores bewegt sich dessen Abschlussprofil in einer horizontalen Ebene innerhalb der seitlichen Führungsschienen auf und ab. Diese Bewegungsrichtung wird im Folgenden als Bewegung auf der Y-Achse bezeichnet.

Torbewegungen innerhalb der Führungsschienen nach links und rechts entstehen aufgrund eines notwendigen Spalts zwischen dem Tor, beziehungsweise dem Abschlussprofil und den seitlichen Führungsschienen. Diese Bewegungsrichtung wird im Folgenden als X-Achse bezeichnet.

Bei einem Crash wird das Tor und insbesondere das Abschlussprofil in die Richtung beschleunigt, die im geöffneten Zustand des Tores die Durchgangsrichtung darstellt und im Folgenden als Z-Achse bezeichnet wird.

Bei einer normalen Torbewegung wird das Abschlussschild des Tores überwiegend in der Y-Achse beschleunigt und bewegt. Aufgrund mechanischer Einflüsse der Lagerungen und Führungen, in denen das Tor bei der Bewegung gehalten und geführt wird, entstehen zudem geringfügige Beschleunigungen in der X-Achse und Z-Achse.

Erfolgt jedoch ein Crash des Tores, weil beispielsweise ein Gabelstapler beim Durchfahren des Tores in der Z-Achse mit dem nur teilweise geöffneten Tor kollidiert, erfolgt eine deutliche Beschleunigung des Tores in der Z-Achse, die mit der erfindungsgemäß am Tor angeordneten Überwachungseinrichtung detektiert wird. Da zur Detektion eines Crashs die Auswertung der Beschleunigung der Z-Achse ausreichend ist, genügt es in der erfindungsgemäßen Überwachungseinrichtung, einen einachsigen Beschleunigungssensor zu verwenden und diesen so anzuordnen, dass er die Beschleunigungen der Z-Achse des Tores auswerten kann.

Vorteilhaft ist die Auswerteeinheit als eine selektierende Auswerteeinheit ausgebildet, derart, dass lediglich solche Signale als Zusammenstoß an die Torsteuerung weitergeleitet werden, die von ihrer Amplitude und/oder zeitlichen Ausprägung auf einen Crash schließen lassen. Hiermit wird eine unnötige Datenübertragung und eine Auswertung in der Torsteuerung hinsichtlich der Beurteilung, ob ein Crash vorliegt oder nicht, vermieden.

Die Informationsübertragung zwischen der Überwachungseinrichtung und der Torsteuerung erfolgt in einer ersten vorteilhaften Ausführungsform unidirektional von der Überwachungseinrichtung zur Torsteuerung und ist dabei als einfache Steuerleitung zur Übertragung eines Signals ausgeführt.

In einer weiteren vorteilhaften Ausführungsform erfolgt die Informationsübertragung zwischen der Überwachungseinrichtung und der Torsteuerung bidirektional. Dies hat den Vorteil, dass die Torsteuerung die Funktionstüchtigkeit der Überwachungseinrichtung überprüfen kann und eine Steuerung der Überwachungseinrichtung durch die Torsteuerung möglich ist.

In einer weiteren vorteilhaften Ausführungsform erfolgt die Informationsübertragung zwischen der Überwachungseinrichtung und der Torsteuerung mittels einer Übertragung von digitalen Daten oder Datenworten, beispielsweise über eine serielle Datenübertragungsstrecke. Diese Ausführungsform hat den Vorteil, dass die Überwachungseinrichtung komplexe Informationen an die Torsteuerung melden kann und die Torsteuerung Parameter und Quittungsinformationen an die Überwachungseinrichtung senden kann.

Besonders vorteilhaft ist die Datenübertragungsstrecke zwischen Überwachungseinrichtung und Torsteuerung als busfähige Datenübertragungsstrecke ausgeführt, die es ermöglicht, dass mehrere Kommunikationsteilnehmer dieselbe Datenübertragungsstrecke nutzen. Als derartige Datenübertragungsstrecke kann beispielsweise die aus der Praxis bekannte RS485 Schnittstelle, der CAN-Bus oder eine andere kabelgebundene Datenbustechnik eingesetzt werden. Der Einsatz einer busfähigen Datenübertragungsstrecke hat den Vorteil, dass der Verdrahtungsaufwand relativ gering ist und eine Nachrüstung der Überwachungseinrichtung an einer bereits bestehenden Torsteuerung mit busfähiger Datenübertragungsstrecke einfach möglich ist.

Gemäß einer besonders bevorzugten Ausführungsform der Erfindung wird die Überwachungsvorrichtung im unteren Abschlussprofil des Tores untergebracht. Dies hat den Vorteil, dass hier bei allen Tortypen ein ausreichend stabiles Element zur Aufnahme der Überwachungseinrichtung vorhanden ist. Zudem ist die Beschleunigung bei einem Crash an dieser Stelle besonders groß.

Gemäß einer weiteren vorteilhaften Ausgestaltung der Erfindung wird der Beschleunigungssensor von einem Mikrocontroller ausgewertet. Durch den Mikrocontroller kann eine Auswertung der elektrischen Signale des Beschleunigungssensors vorgenommen werden, so dass nur solche Beschleunigungen als Crash an die Torsteuerung gemeldet werden, die bei einem Soll-/Ist-Vergleich, der aus einer Analyse des zeitlichen Verlaufs und/oder der Amplitude der Signale des Beschleunigungssensors besteht, von dem Ist-Wert in einem vordefinierten Bereich abweichen.

Gemäß einer weiteren vorteilhaften Ausführungsform der Erfindung wird die Überwachungseinrichtung über wenigstens eine Batterie versorgt. Es ist auch möglich, wenigstens einen Akkumulator vorzusehen, der beispielsweise über eine Solarzelle gespeist wird. Durch die Batterie oder den Akkumulator wird auch im spannungslosen Zustand der Torsteuerung der Schaltimpuls, der bei einem Crash auftritt, detektiert. Die Überwachungseinrichtung kann vorteilhaft den Crash auch dann detektieren, wenn die Überwachungseinrichtung lediglich von der wenigstens einen Batterie oder dem wenigstens einen Akkumulator mit elektrischer Spannung versorgt wird.

Vorteilhaft ist eine nachgeschaltete Elektronik, die als Auswerteeinheit bezeichnet wird und einen Mikrokontroller beinhalten kann, vorgesehen, durch die das Crash-Ereignis auch gespeichert werden kann. Vorteilhaft erfolgt dann eine Quittierung des Crash-Ereignisses durch die Torsteuerung.

Ist die Torsteuerung nicht aktiv und kann die Meldung nicht entgegennehmen, wird die Information, dass ein Crash stattgefunden hat, vorteilhaft in der Auswertevorrichtung gespeichert, die die Meldung an die Torsteuerung weitergibt, sobald diese wieder aktiv ist. Hierdurch wird vermieden, dass die Torsteuerung einen Fahrbefehl an das Tor gibt, wenn das Tor durch einen Crash, der im Stillstand stattgefunden hat, nicht betriebsbereit ist.

Um jegliche Bewegung des Tores nach einem Zusammenstoß auszuschließen, quittiert die Torsteuerung vorteilhaft die Crash-Meldung.

Gemäß einer besonders bevorzugten Ausführungsform der Erfindung erfolgt keine externe Verdrahtung, sondern die Informationsübertragung erfolgt drahtlos, zum Beispiel über Funk oder optisch.

In diesem Fall wird die Überwachungseinrichtung durch eine Batterie oder einen Akkumulator oder eine sonstige mobile Stromversorgung mit elektrischer Energie versorgt und weist neben dem Beschleunigungssensor und der Auswerteeinheit einen Sender/Empfänger zur drahtlosen Datenübertragung mit einer Torsteuerung auf, wobei in der einfachsten Ausführungsform ein unidirektionaler Sender ausreichend ist. Im Normalfall befindet sich die Auswerteeinheit und der Sender/Empfänger in einem Strom sparenden Ruhezustand. Dem Beschleunigungssensor kommt in dieser Ausführungsform die weitere Aufgabe zu, auch als Weckvorrichtung zu arbeiten und im Falle von Beschleunigungen, die ein definiertes Maß überschreiten, die Auswerteeinheit aus dem Strom sparenden Ruhezustand zu wecken, damit diese die Sensorsignale auswertet und entscheiden kann, ob ein Crash vorliegt und eine Informationsübertragung über den Sender/Empfänger an die Torsteuerung weiterzuleiten ist.

Diese Überwachungseinrichtung weist den Vorteil auf, dass keine Leitungsverbindung zur Torsteuerung benötigt wird. Zudem benötigt diese Ausführungsform sehr wenig Strom, da ausschließlich der Beschleunigungssensor mit Strom versorgt werden muss, und die Auswerteeinheit und der Sender/Empfänger nur im Bedarfsfall aktiviert werden.

Gemäß einer weiteren vorteilhaften Ausführungsform der Erfindung ist der Beschleunigungssensor hinsichtlich der Ansprechschwelle und der Erschütterungsrichtung parametrierbar, so dass der Sensor für die speziellen Anforderungen angepasst werden kann.

Im Einzelfall kann das System vorteilhaft sicherheitsrelevant, zum Beispiel redundant ausgeführt sein.

Die erfindungsgemäße Überwachungseinrichtung weist den Vorteil auf, dass auf teure und verschleißanfällige Schaltelemente verzichtet werden kann, und dass darüber hinaus die mechanische Einstellarbeit der Sensoren in oder an den Führungselementen entfällt. Darüber hinaus weist die Vorrichtung den Vorteil auf, dass sie keinem Verschleiß unterliegt, dass keine Beschädigungen auftreten, und dass keine besondere Konstruktion erforderlich ist.

Die erfindungsgemäße Überwachungseinrichtung ist vorteilhaft derart ausgestaltet, dass sie einen Zusammenstoß erkennt, unabhängig davon, ob sich das Torblatt in Bewegung befindet oder nicht. Das bedeutet, dass sie einen Zusammenstoß im Wesentlichen in horizontaler Richtung (Z-Achse) oder mit einer entsprechend großen horizontalen Komponente erkennt.

Weitere Merkmale und Vorteile der Erfindung ergeben sich anhand der zugehörigen Zeichnung, in der ein Ausführungsbeispiel eines erfindungsgemäßen Tores nur beispielhaft dargestellt ist. In den Zeichnungen zeigen:
- Fig. 1: eine Prinzipskizze eines Tores;
- Fig. 2: ein Blockschaltbild der erfindungsgemäßen Überwachungseinrichtung;
- Fig. 3: ein Blockschaltbild der erfindungsgemäßen Überwachungseinrichtung für drahtlose Datenübertragung;
- Fig. 4: die schematischen Signale der Z-Achse eines Beschleunigungssensors während einer Auf- oder Abbewegung des Tores;
- Fig. 5: die schematischen Signale der Z-Achse eines Beschleunigungssensors bei einem Crash.

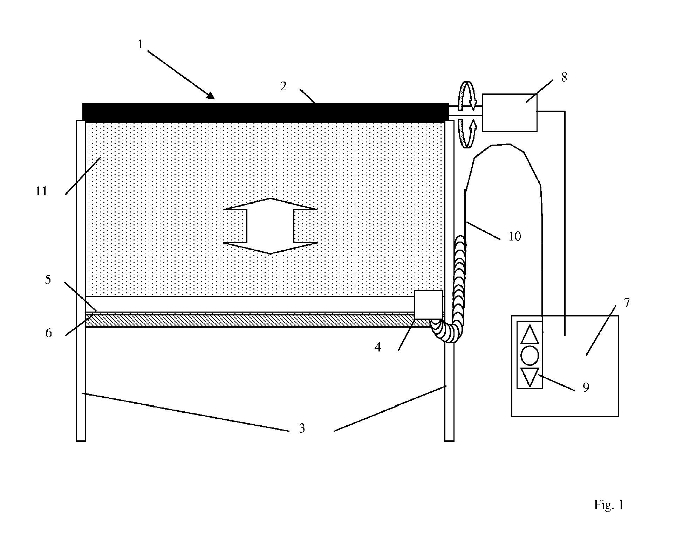

Fig. 1 zeigt ein Tor 1 mit einem Torblatt 11, welches als Folienschnelllauftor ausgestaltet ist. Das Torblatt 11 wird beim Öffnen auf einer Torwelle 2 aufgewickelt, wobei es seitlich in Führungsschienen 3 geführt wird. Die Torwelle 2 wird von einem Torantrieb 8 in Rotation versetzt. Die Steuerung des Torantriebs 8 erfolgt über eine Torsteuerung 7, die Bedienelemente 9 aufweist, über die ein Bediener Befehle zum Öffnen, Stoppen oder Schließen des Tores eingeben kann. An einem Abschlussprofil 5, welches an der Unterkante des Tores 1 angeordnet ist, ist neben einer Sicherheitsleiste 6, die dazu dient, ein Signal abzugeben, wenn das Tor auf ein Hindernis fährt, eine erfindungsgemäße Überwachungseinrichtung 4 angeordnet, die dazu dient, ein Signal abzugeben, wenn ein sich bewegendes Objekt mit dem Tor 1 kollidiert und damit einen Crash auslöst. Bei einem Crash des Torblattes 11 wird ein Signal über ein Spiralkabel 10 an eine Torsteuerung 7 übermittelt.

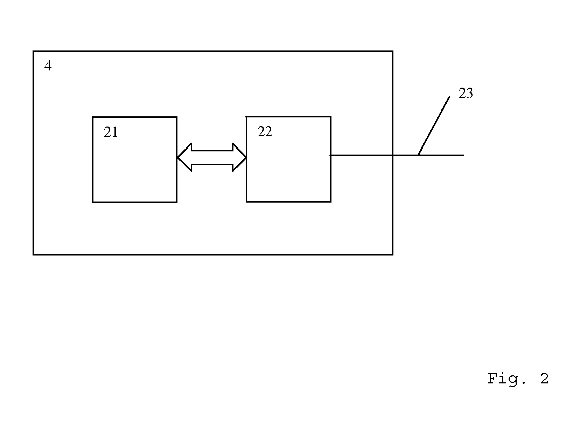

Fig. 2 zeigt ein Blockschaltbild einer möglichen Ausführungsform der Überwachungseinrichtung 4, die einen Beschleunigungssensor 21 und eine Auswerteeinheit 22 aufweist, die als Mikrocontroller ausgeführt sein kann. Die Auswerteeinheit 22 hat dabei die Aufgabe, die Signale des Beschleunigungssensors 21 dahingehend auszuwerten, ob ein Crash stattgefunden hat, um diese Information in Form eines elektrischen Signals oder in Form digitaler Informationen über ein Interface 23, welches als unidirektionales oder bidirektionales Interface 23 ausgeführt sein kann, an die Torsteuerung 7 zu melden.

Übersteigt ein Messwert des Beschleunigungssensors 21 einen in der Auswerteeinheit 22 eingestellten Schwellwert oder übersteigen eine gewisse Anzahl von Messwerten in einem zuvor definierten Zeitraum einen zuvor definierten Schwellwert, übermittelt die Auswerteeinheit 23 eine Information an die Torsteuerung 7, dass ein Crash stattgefunden hat. Die Ermittlung, ob ein Crash stattgefunden hat, kann dabei aber auch durch eine Mittelwertbildung oder eine andere Art der Filterung einer Mehrzahl von Messwerten des Beschleunigungssensors 21 über einen definierten Zeitraum erfolgen.

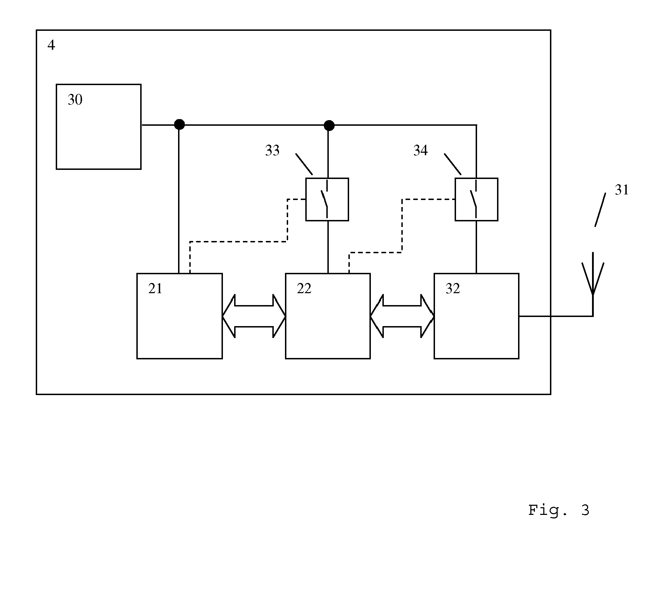

Fig. 3 zeigt eine weitere Ausführungsform der Überwachungseinrichtung 4, die in dieser Ausführungsform für die drahtlose Datenübertragung zu der Torsteuerung 7 (nicht dargestellt) ausgelegt ist. Der Beschleunigungssensor 21 wird dabei von einer Batterie 30 elektrisch versorgt. Sobald der Beschleunigungssensor 21 eine Beschleunigung detektiert hat, die einen zuvor definierten Schwellwert überschreitet, wird über einen Schalter 33 die Auswertevorrichtung 22 eingeschaltet, die eine Überprüfung dahingehend durchführt, ob die detektierten Beschleunigungen ein Crash sind. Wird von der Auswertevorrichtung 22 ein Crash erkannt, schaltet sie über einen Schalter 34 einen Sender/Empfänger 32 zu und initiiert eine Informationsübertragung über den Sender/Empfänger 32 und eine Antenne 31 an die Torsteuerung 7 (hier nicht dargestellt).

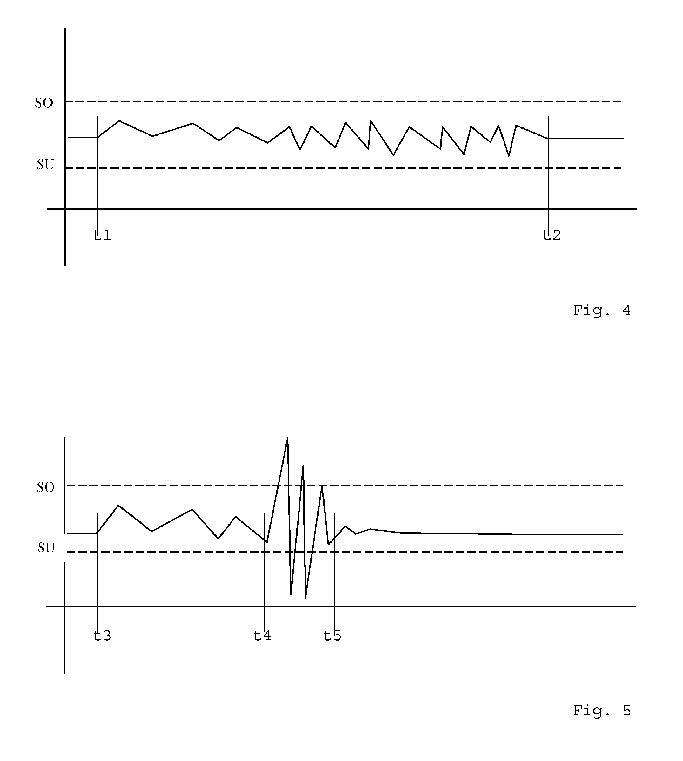

Fig. 4 zeigt schematisch die Signale der Z-Achse des Beschleunigungssensors 21 während der Aufbewegung des Tores 1. Die gestrichelten Linien SO und SU stellen dabei die Schwellwerte dar, die bei einer normalen Torbewegung nicht über- beziehungsweise unterschritten werden. Zum Zeitpunkt t1 startet die Aufbewegung des Tores 1 und endet zum Zeitpunkt t2.

Fig. 5 zeigt wiederum die Signale der Z-Achse des Beschleunigungssensors 21 während der Aufbewegung, wobei die Aufbewegung zum Zeitpunkt t3 beginnt. Bis zum Zeitpunkt t4 überschreiten die Signale weder den oberen Schwellwert SO, noch den unteren Schwellwert SU. Es handelt sich bis zum Zeitpunkt t4 somit um eine normale Aufbewegung. Ab dem Zeitpunkt t4 sind einige Amplituden erkennbar, die die oberen und unteren Schwellwerte SO und SU überschreiten und somit von der Überwachungseinrichtung 4 als Crash angesehen werden, woraufhin diese einen Crash an die Torsteuerung 7 meldet. Aufgrund der Crashmeldung der Überwachungseinrichtung 4 stoppt die Torsteuerung 7 die Torbewegung zum Zeitpunkt t5.

### Bezugszahlen

- 1: Tor
- 2: Torwelle
- 3: Führungsschienen
- 4: Überwachungseinrichtung
- 5: Abschlussprofil
- 6: Sicherheitssensor
- 7: Torsteuerung
- 8: Torantrieb
- 9: Bedienelemente
- 10: Spiralkabel
- 11: Torblatt
- 21: Beschleunigungssensor
- 22: Auswertevorrichtung
- 23: Interface
- 30: Batterie
- 31: Antenne
- 32: Sender/Empfänger
- 33, 34: Schalter
- SO: Schwellwert
- SU: Schwellwert
- t1: Zeitpunkt
- t2: Zeitpunkt
- t3: Zeitpunkt
- t4: Zeitpunkt
- t5: Zeitpunkt

## Patentansprüche

1. Überwachungseinrichtung für ein motorisch angetriebenes Tor mit einer Torsteuerung zur Erkennung eines Crashs eines sich bewegenden Objektes mit dem Tor und zur Übermittlung der Information, ob ein Crash stattgefunden hat, an die Torsteuerung,
**dadurch gekennzeichnet , dass** die Überwachungseinrichtung (4) mindestens einen eine Bewegung, eine Erschütterung und/oder eine Vibration des Tores 1 in einer Z-Achse überwachenden Sensor (21) aufweist, der in einem und/oder an einem Torblatt (11) des Tores (1) angeordnet ist, und dass eine Auswerteeinheit (22) vorgesehen ist, die als eine die Signale des Sensors (21) auswertende und als eine wenigstens eine Information an die Torsteuerung (7) übertragende Auswerteeinheit (22) ausgebildet ist.

2. Überwachungseinrichtung nach Anspruch 1, **dadurch gekennzeichnet, dass** die Auswerteeinheit (22) als eine selektierende Auswerteeinheit (22) ausgebildet ist, derart, dass lediglich solche Signale als Crash an die Torsteuerung (7) weitergeleitet werden, die von ihrer Amplitude und/oder zeitlichen Ausprägung auf einen Crash schließen lassen.

3. Überwachungseinrichtung nach Anspruch 1 oder 2, **dadurch gekennzeichnet, dass** die Überwachungseinrichtung (4) in einem oder an einem unteren Abschlussprofil (5) des Tores (1) angeordnet ist.

4. Überwachungseinrichtung nach Anspruch 1, **dadurch gekennzeichnet, dass** die Auswerteeinheit (22) einen den Sensor (21) auswertenden Mikrocontroller aufweist.

5. Überwachungseinrichtung nach einem der vorhergehenden Ansprüche, **dadurch gekennzeichnet, dass** wenigstens eine Batterie (30) und/oder wenigstens ein Akkumulator zur Speisung der Überwachungseinrichtung (4) vorgesehen ist.

6. Überwachungseinrichtung nach Anspruch 5, **dadurch gekennzeichnet, dass** die Überwachungseinrichtung (4) als eine einen Crash auch dann registrierende Überwachungseinrichtung (4) ausgestaltet ist, wenn die Überwachungseinrichtung (4) lediglich von der wenigstens einen Batterie (30) oder dem wenigstens einen Akkumulator mit elektrischer Spannung versorgt wird.

7. Überwachungseinrichtung nach einem der vorhergehenden Ansprüche, **dadurch gekennzeichnet, dass** für eine Informationsübertragung zwischen der Überwachungseinrichtung (4) und der Torsteuerung (7) eine drahtlose über eine Funkverbindung oder eine optische Verbindung erfolgende Übertragung vorgesehen ist.

8. Überwachungseinrichtung nach einem der vorhergehenden Ansprüche, **dadurch gekennzeichnet, dass** die Informationsübertragung zwischen der Überwachungseinrichtung (4) und der Torsteuerung (7) in Form digitaler Daten oder Datenworte erfolgt.

9. Überwachungseinrichtung nach einem der vorhergehenden Ansprüche, **dadurch gekennzeichnet, dass** für die Informationsübertragung zwischen der Überwachungseinrichtung (4) und der Torsteuerung (7) eine bidirektionale Informationsübertragung vorgesehen ist.

10. Überwachungseinrichtung nach einem der vorhergehenden Ansprüche, **dadurch gekennzeichnet, dass** für die Informationsübertragung zwischen der Überwachungseinrichtung (4) und einer Torsteuerung (7) eine busfähige Datenübertragungsstrecke vorgesehen ist.

11. Überwachungseinrichtung nach einem der vorhergehenden Ansprüche, **dadurch gekennzeichnet, dass** die Überwachungseinrichtung (4) und/oder der Beschleunigungssensor (21) hinsichtlich seiner Ansprechschwelle parametrierbar ausgebildet ist.

12. Überwachungseinrichtung nach einem der vorhergehenden Ansprüche, **dadurch gekennzeichnet, dass** die Auswerteeinrichtung (21) eine Speichervorrichtung aufweist, in der die Informationen über einen Crash mindestens so lange in der Überwachungseinrichtung (4) gespeichert werden, bis sie von der Torsteuerung (7) quittiert werden.

13. Überwachungseinrichtung nach einem der vorhergehenden Ansprüche, **dadurch gekennzeichnet, dass** der Sensor (21) als Erschütterungssensor, Vibrationssensor und/oder als Beschleunigungssensor ausgebildet ist.

14. Überwachungseinrichtung nach Anspruch 1, **dadurch gekennzeichnet, dass** der die Bewegung, die Erschütterung und/oder die Vibration detektierende Sensor (21) ausschließlich in der Z-Achse die Bewegung, die Erschütterung und/oder die Vibration erfasst.
